Europäisches Patentamt

European Patent Office

Office européen des brevets

(11) Veröffentlichungsnummer: **0 284 755 B1**

(12) **EUROPÄISCHE PATENTSCHRIFT**

(45) Veröffentlichungstag der Patentschrift:
**27.12.90**

(21) Anmeldenummer: **88102270.1**

(22) Anmeldetag: **17.02.88**

(51) Int. Cl.⁵: **B25B 23/14, B25B 21/00**

(54) Schrauber.

(30) Priorität: **17.03.87 DE 3708603**

(43) Veröffentlichungstag der Anmeldung:
**05.10.88 Patentblatt 88/40**

(45) Bekanntmachung des Hinweises auf die Patenterteilung:
**27.12.90 Patentblatt 90/52**

(84) Benannte Vertragsstaaten:
**DE FR GB IT SE**

(56) Entgegenhaltungen:
**DE-A- 3 326 993**
**FR-A- 2 360 383**
**US-A- 3 442 360**

**MACHINE DESIGN, Band 45, Nr. 11, 3. Mai 1973,**
**Seite 46: "Integral Muffler hushes hand tools"**

(73) Patentinhaber: **ROBERT BOSCH GMBH, Postfach 50,**
**D-7000 Stuttgart 1(DE)**

(72) Erfinder: **Blöchle, Hans. Dipl.-Ing., Wiesenstrasse 21,**
**D-7257 Ditzingen(DE)**
Erfinder: **Habele, Michael, Ing. (FH), Friedhofstrasse 10,**
**D-7035 Waldenbuch(DE)**

## Beschreibung

### Stand der Technik

Die Erfindung geht aus von einem Schrauber nach der Gattung des Hauptanspruchs. Aus der DE-OS 33 26 993 ist bereits ein Schrauber bekannt, der bezüglich des Schraubgetriebes einen ähnlichen Aufbau aufweist. Allerdings werden bei diesem Schrauber zwei getrennte Motoren für den Spindelvorschub und den Drehantrieb gebraucht. Außerdem ist die Regelung sehr aufwendig.

### Vorteile der Erfindung

Der erfindungsgemäße Schrauber mit den kennzeichnenden Merkmalen des Hauptanspruchs hat demgegenüber den Vorteil, daß der gesamte Spindelvorschub und zwar auch der Leerlaufvorschub bis das Schraubwerkzeug den Schraubenkopf erreicht sowie die Drehbewegung über einen einzigen Antrieb erfolgen. Durch die Integration des Vorschubmechanismus in die Antriebswelle wird eine sehr kurze Bauweise erreicht. Ein weiterer wichtiger Vorteil ist, daß die Regelung des Schraubers äußerst einfach und robust ist. Am Ende des Schraubvorgangs wird beim Aufsetzen des Schraubenkopfs auf dem Werkstück der Vorschub durch die erhöhte Axialkraft von dem Schraubwerkzeug entkoppelt, indem der Konusteller der Spindel von dem Haftkonus abhebt. Wenn das Eindrehmoment zu hoch wird, erfolgt eine Entkoppelung des Antriebs durch Überwindung der Reibkraft zwischen Konusteller und Haftkonus ohne die bisher üblichen Rattergeräusche.

Durch die in den Unteransprüchen aufgeführten Maßnahmen sind vorteilhafte Weiterbildungen und Verbesserungen des im Hauptanspruch angegebenen Schraubers möglich. Besonders vorteilhaft ist, daß die entkuppelnde Axialkraft und das entkuppelnde Grenzdrehmoment auf einfache Weise durch Einstellschrauben verändert werden können. Durch den Einbau von Schaltern oder Sensoren kann der Schrauber auch in der automatischen Fertigung eingesetzt werden.

### Zeichnung

Zwei Ausführungsbeispiele des Schraubers sind in der Zeichnung dargestellt und in der nachfolgenden Beschreibung näher erläutert. Figur 1 zeigt eine Seitenansicht eines ersten Ausführungsbeispiels im Schnitt. In Figur 2 ist der obere Teil und in Figur 3 der untere Teil eines zweiten Ausführungsbeispiels des Schraubers in vergrößerter Darstellung gezeigt.

### Beschreibung der Ausführungsbeispiele

Der als Winkelkopf ausgeführte Schrauber enthält eine in einem Spindelgehäuse 1 gelagerte Welle 2 mit Kegelrad 3. Die Welle wird durch einen nicht gezeigten Druckluft- oder Elektromotor angetrieben. Mit dem Kegelrad in Eingriff steht ein Tellerrad 4, das einstückig mit der Antriebswelle 5 verbunden ist. Diese ist über die Axiallager 6 und 7 sowie das Nadellager 8 mit Stützscheibe 9 in dem mit dem Spindelgehäuse 1 verschraubten Lagerflansch 10 axial unverschieblich gelagert. Am unteren Ende des Lagerflansches 10 sind zwei Backen 11 und 12 zum Halten der Schraube 13 beweglich angeordnet.

Die Antriebswelle 5 ist an ihrem unteren Ende innen keilverzahnt. Darin greift eine Keilverzahnung 14 der hohlen Keilwelle 15 ein. Die Keilwelle 15 weist am vorderen Ende ein kurzes Innengewinde 16 für das Schraubwerkzeug 17 auf. Über die restliche Länge der Keilwelle 15 erstreckt sich ein weiteres Innengewinde 18. Am oberen Ende trägt die Keilwelle 15 einen Kragen 19 mit größerem Durchmesser als die Keilverzahnung 14. Der Kragen 19 begrenzt den Verschiebeweg der Keilwelle 15 nach oben gegenüber dem Spindelgehäuse 1 und nach unten gegenüber dem keilverzahnten unteren Endteil 20 der Antriebswelle 5, wobei die Bohrung 21 der Antriebswelle 5 ist weit genug ist, um den Kragen 19 hindurchtreten zu lassen.

In das Innengewinde 18 der Keilwelle 15 ist eine Spindel 22 eingeschraubt, die am oberen Ende einen Konusteller 23 trägt, wobei die Konusfläche nach unten zeigt und auf einem in eine Bohrung 24 im Spindelgehäuse eingelegten scheibenförmigen Haftkonus 25 aufliegt. Die Spindel 22 steht unter der Kraft einer Druckfeder 26, die in eine Büchse 27 eingelegt ist, die unter Zwischenlage eines Axialnadelkranzes 28 und einer Scheibe 29 in einer Bohrung 30 eines mit dem Spindelgehäuse 1 verschraubten Deckels 31 gelagert ist. In den Deckel 31 ist von oben eine auf die Scheibe 29 einwirkende Rändelschraube 32 mit Rändelmutter 33 eingeschraubt.

Nicht gezeigt ist das seitlich schräg nach unten verlaufende Einführrohr für die zu verarbeitenden Schrauben. Lediglich dessen Öffnung 34 ist sichtbar.

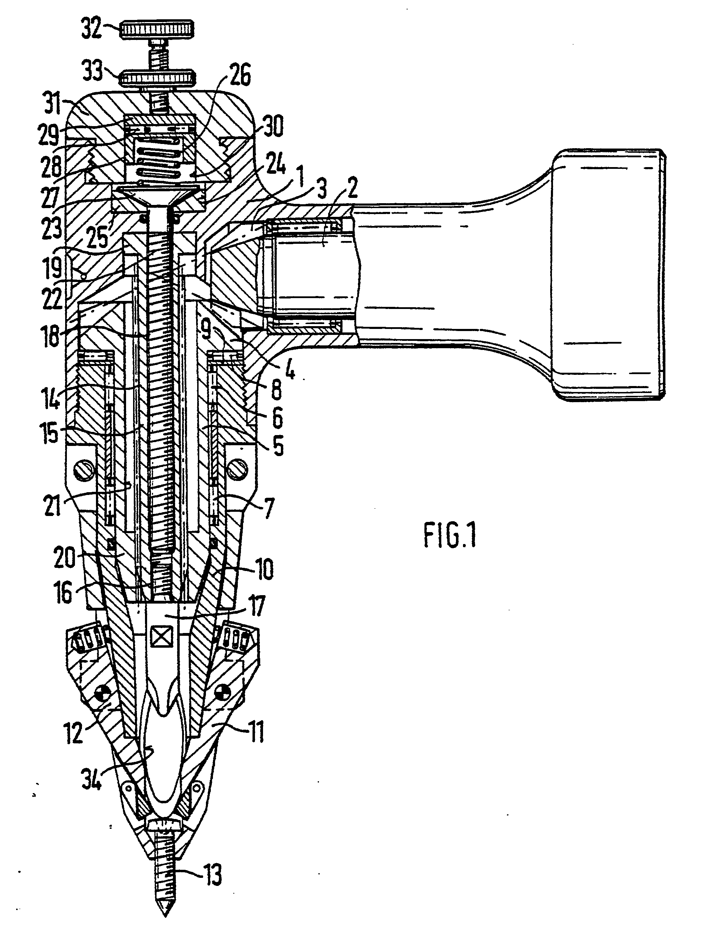

Beim Einschraubvorgang befindet sich die Keilwelle zunächst in der in Figur 1 gezeigten Stellung. Nach dem Einschalten des Antriebs entweder von Hand oder wie später noch beschrieben wird automatisch, dreht sich die Antriebswelle 5 zusammen mit der Keilwelle 15, wobei die Spindel 22 still steht. Dies führt zu einer Abwärtsbewegung der Keilwelle und des Schraubwerkzeugs 17. Dieses trifft auf den Schraubenkopf auf und schraubt die Schraube 13 ein. Wird nun z.B. beim Auftreffen des Schraubenkopfes auf dem Werkstück eine Axialkraft auf das Schraubwerkzeug 17 ausgeübt, die größer als die Kraft der Druckfeder 26 abzüglich des Drehmoments ist, hebt sich die Spindel 22 vom Haftkonus 25 ab und dreht sich über das Axiallager 28 mit der Keilwelle 15 und der Antriebswelle 5 mit.

Die den Einschraubvorgang abbrechende Axialkraft kann durch die Rändelschraube 32 voreingestellt werden. Die Rändelmutter 33 dient zum Kontern der Rändelschraube 32.

Zum Einfahren des Schraubwerkzeugs 17 wird die Drehrichtung der Antriebswelle 5 von Hand oder automatisch umgeschaltet. Am Haftkonus 25 entsteht wieder fester Reibschluß und die Keilwelle 15 schraubt sich nach innen, bis sie mit ihrem Kragen am Spindelgehäuse 1 gegen Block läuft und die Drehbewegung zum Stehen kommt. Die dabei entstehende Axialkraft wird von der Spindel 22 und der Keilwelle 15 aufgenommen. Der Antriebsmotor kann nun abgeschaltet werden.

Außer durch Axialkraft wird der Schraubvorgang auch beim Überschreiten des Reibdrehmoments zwischen Konusteller 23 und Haftkonus 25 unterbrochen. Dadurch wird z.B. das Eindrehen von falschen Schrauben verhindert.

Der Schrauber kann für vollautomatischen Betrieb mit Sensoren ausgerüstet werden, mit Hilfe derer der Antriebsmotor geschaltet wird.

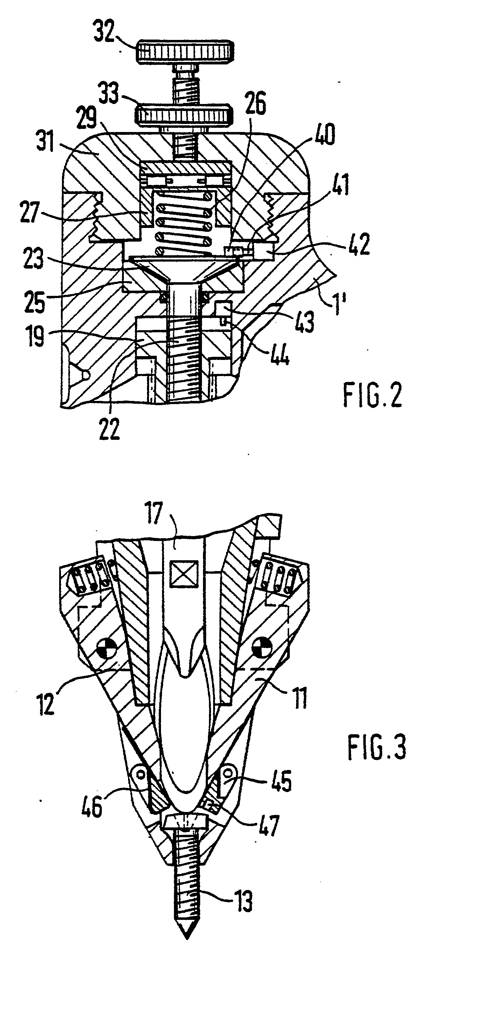

Das Abheben des Konustellers 23 kann z.B. durch mechanische oder piezoelektrische Sensoren in der Druckfläche des Haftkonus 25 erkannt werden oder durch z.B. mechanische Sensoren, die durch die Drehung der Spindel 22 ausgelöst werden. In diesem Fall sind am Konusteller 23 ein oder mehrere Fortsätze 40 (Figur 2) angeordnet, die über die Außenkontur des Konustellers 23 hinausragen und auf den Schaltarm 41 des mechanischen Schalters 42 einwirken, der am Spindelgehäuse 1 befestigt ist. Der Schalter 42 ist zweckmäßig als Impulsschalter ausgebildet und bewirkt eine Drehrichtungsumkehr des Antriebsmotors.

Ein zweiter Schalter 43 ist im Spindelgehäuse 1 oberhalb des Kragens 19 angeordnet. Beim Auftreffen des Kragens 19 der Keilwelle 15 bewirkt er eine Abschaltung des Antriebsmotors. Der Schalter 43 ist zweckmäßig ein Impulsschalter und hat einen einfachen mechanischen Schaltstift 44.

Als dritter Sensor kann in den Backen 11, 12 bzw. den Sperrklinken 45, 46 (Figur 3) ein Sensor 47 angeordnet sein, der den Antriebsmotor einschaltet, sobald bei gegen das Werkstück angedrückter Schraube 13 vom Schraubenkopf eine Kraft auf den Sensor 47 ausgeübt wird.

Die Sensoren können außer nach mechanischem auch nach kapazitivem, induktivem, piezoelektrischem, dem Ultraschall- oder dem Wirbelstromprinzip oder nach anderen Prinzipien arbeiten.

**Patentansprüche**

1. Schrauber mit einer Spindel (22) und einer mit dieser axial beweglich in Gewindeverbindung stehenden und sie umschließenden Keilwelle (15) mit außen in ihrer Achsrichtung verlaufender Keilverzahnung sowie einer die Keilwelle antreibenden Antriebswelle (5) mit Innenkeilverzahnung und einem Schraubwerkzeug (17) das an der Keilwelle (15) befestigt ist, zum Einschrauben von Schrauben, dadurch gekennzeichnet, daß die Spindel (22) einen Konusteller (23) aufweist, der auf einem fest mit dem Spindelgehäuse (1) verbundenen Haftkonus (25) aufliegt und der Konusteller (23) abhebbar gegen den Haftkonus (25) gepreßt wird.

2. Schrauber nach Anspruch 1, dadurch gekennzeichnet, daß der Konusteller (23) durch eine Feder (26) gegen den Haftkonus (25) gepreßt wird.

3. Schrauber nach Anspruch 2, dadurch gekennzeichnet, daß die Kraft der Feder (26) einstellbar ist.

4. Schrauber nach Anspruch 3, dadurch gekennzeichnet, daß die Feder (26) durch die Rändelschraube (32), die durch eine Rändelmutter (33) konterbar ist, einstellbar ist.

5. Schrauber nach einem der vorhergehenden Ansprüche, dadurch gekennzeichnet, daß der Antriebsmotor durch Schalter (42, 43) oder Sensoren (47) gesteuert wird.

6. Schrauber nach Anspruch 5, dadurch gekennzeichnet, daß ein Schalter (42) oder Sensor bei Eintreten der Drehbewegung der Spindel (23) gegenüber dem Spindelgehäuse (1) ein Umschalten der Drehrichtung des Antriebsmotors bewirkt.

7. Schrauber nach Anspruch 4, dadurch gekennzeichnet, daß ein Schalter (43) beim Auftreffen des Kragens (19) der Spindel (22) am Spindelgehäuse (1) den Antriebsmotor abschaltet.

8. Schrauber nach einem der vorhergehenden Ansprüche, dadurch gekennzeichnet, daß ein Sensor (47) ein Einschalten des Antriebsmotors dadurch bewirkt, daß eine zwischen die Backen (11, 12) eingeführte Schraube beim Anlegen an ein Werkstück axial ins Innere des Schraubers gedrückt wird.

**Claims**

1. Screwing device having a spindle (22) and a splined shaft (15), which is in threaded connection with the latter so as to be axially movable and encloses it, having, on the outside, splines running in its axial direction and also a drive shaft (5) driving the splined shaft and having internal splines, and a screwing tool (17), which is fastened to the splined shaft (15), for screwing in screws, characterized in that the spindle (22) has a conical plate (23) which lies on a conical retaining socket (35) firmly connected to the spindle housing (1), and the conical plate (23) is pressed against the conical retaining socket (25) so as to be able to be lifted off.

2. Screwing device according to Claim 1, characterized in that the conical plate (23) is pressed against the conical retaining socket (25) by a spring (26).

3. Screwing device according to Claim 2, characterized in that the force of the spring (26) is adjustable.

4. Screwing device according to Claim 3, characterized in that the spring (26) can be adjusted by the knurled screw (32) which can be locked by a knurled nut (33).

5. Screwing device according to one of the preceding claims, characterized in that the drive motor is controlled by switches (42, 43) or sensors (47).

6. Screwing device according to Claim 5, characterized in that a switch (42) or sensor brings about a change in the direction of rotation of the drive motor upon commencement of the rotary movement of the spindle (23) (sic) with respect to the spindle housing (1).

7. Screwing device according to Claim 4, characterized in that a switch (43) switches off the drive motor when the collar (19) of the spindle (22) impinges on the spindle housing (1).

8. Screwing device according to one of the preceding claims, characterized in that a sensor (47) switches on the drive motor as a result of the fact that a screw introduced between the jaws (11, 12) is pressed axially into the interior of the screwing device when the screw is brought to bear against a workpiece.

**Revendications**

1. Dispositif de vissage comprenant une broche (22), un arbre cannelé (15) entourant celle-ci et se déplaçant axialement avec elle par liaison de filtage, avec extérieurement une denture trapézoïdale se développant dans le sens de l'axe ainsi qu'un arbre de transmission (5) commandant l'arbre cannelé avec une denture cannelée intérieure et un outil de vissage (17) fixé à l'arbre cannelé (15), caractérisé en ce que la broche (22) comprend un disque conique (23) qui s'appuye sur un cône d'adhérence (25) fixé au boîtier de broche (1) et en ce que le disque conique (23) est pressé contre le cône d'adhérence (25) avec possibilité d'être soulevé.

2. Dispositif de vissage selon la revendication 1, caractérisé en ce que le disque conique (23) est pressé contre le cône d'adhérence (25) par un ressort (26).

3. Dispositif de vissage selon la revendication 2, caractérisé en ce que la force du ressort (26) est réglable.

4. Dispositif de vissage selon la revendication 3, caractérisé en ce que le ressort (26) peut être ajusté par la vis moletée (32), qui peut être bloquée par un écrou moleté (33).

5. Dispositif de vissage selon l'une quelconque des revendications précédentes, caractérisé en ce que le moteur d'entraînement est commandé par des commutateurs (42, 43) ou détecteurs (47).

6. Dispositif de vissage selon la revendication 5, caractérisé en ce qu'un commutateur (42) ou détecteur à l'arrivée du mouvement de rotation de la broche (23) en présence du boîtier de broche (1) provoque une inversion du sens de rotation du moteur d'entraînement.

7. Dispositif de vissage selon la revendication 4, caractérisé en ce qu'un commutateur (43) met hors circuit le moteur d'entraînement au moment du contact de la collerette (19) de la broche (22).

8. Dispositif de vissage selon l'une quelconque des revendications précédentes, caractérisé en ce qu'un détecteur (47) provoque la mise en route du moteur d'entraînement du fait, qu'une vis introduite entre les joues (11, 12) se trouve pressée axialement vers l'intérieur du dispositif de vissage, au moment de la mise en place contre la pièce à traiter.

FIG.1

FIG.2

FIG.3